# EUROPÄISCHE PATENTSCHRIFT

(11) **EP 1 171 268 B1**
(45) Veröffentlichungstag und Bekanntmachung des Hinweises auf die Patenterteilung: **21.01.2004**
(21) Anmeldenummer: 00920694.7
(22) Anmeldetag: 12.04.2000
(51) Int. Cl.: B27N 3/14

(54) **STREUSTATION FÜR FASERPLATTEN**
SCATTERING STATION FOR FIBRE PLATES
POSTE DE DISPERSION POUR PANNEAUX DE FIBRES

(30) Priorität: 12.04.1999 DE 19916448
(43) Veröffentlichungstag der Anmeldung: 16.01.2002
(73) Patentinhaber: Dieffenbacher Schenck Panel GmbH, 64319 Pfungstadt (DE)
(72) Erfinder: HENSCHEL, Walter, D-64853 Otzberg (DE); NATUS, Günter, D-64367 Mühltal (DE); WOLF, Lutz, D-64285 Darmstadt (DE)
(74) Vertreter: Behrens, Helmut, Dipl.-Ing.
(86) Internationale Anmeldenummer: PCT/EP2000/003278
(87) Internationale Veröffentlichungsnummer: WO 2000/061341

(56) Entgegenhaltungen:
- EP-A- 0 161 323
- EP-A- 0 800 902
- US-A- 4 308 227
- US-A- 5 496 570
- US-A- 5 854 426

## Beschreibung

Die Erfindung betrifft eine Streustation für Faserplatten gemäß dem Oberbegriff des Patentanspruchs 1.

Bei den mittelharten Faserplatten (MDF = Medium Density Fiberboard), den hochdichten Faserplatten (HDF = High Dencity Fiberboard) und den Faser-Dämmplatten handelt es sich um Holzwerkstoffplatten aus Faserstoff. Diese Faserplatten werden in Dicken von 1,6 bis 40 mm und in einem Dichtebereich von ca. 350 bis 1.000 kg/m³ hergestellt und vorzugsweise in der Möbelindustrie und im Innenausbau verwendet. Die Faserplatten unterscheiden sich von der Spanplatte durch ihre gleichmäßige Faser, glatte Oberfläche und geschlossene Kantenfläche. Durch die Herstellung der Faserplatte aus verhältnismäßig dünnen Holzfasern ergibt sich beim Streuvorgang ein sehr voluminöses Faservlies, dessen Streuhöhe etwa das 20- bis 40-fache der Fertigplatte beträgt. Hierzu müssen Vlieshöhen von 6 bis 160 cm gestreut werden, die schon von der Volumenbewältigung hohe Anforderungen an die Streustation stellen. Insbesondere ist es schwierig, mit einer derartigen Streustation Vliese für Platten mit unterschiedlicher Dicke und Breite zu streuen.

Eine derartige Streustation für MDF-Platten ist aus dem Deppe und Ernst, Taschenbuch der Spanplattentechnik, 3. Auflage, Tübingen 1991, Seite 272 bekannt. Dort werden die einem Stoffbunker entnommenen beleimten Holzfasern über eine Austragsfront einem Streukopf mit Stachelwalzen zugeführt. Die Stachelwalzen sind in Förderrichtung hintereinander und zu einer horizontalen Linie schräg angeordnet, wobei in Förderrichtung die letzte Walze in maximaler Streuhöhe befestigt ist. Durch die Auflockerung der gestreuten Fasern entsteht ein voluminöses Faservlies, dessen Oberfläche sehr uneben und deren Streuhöhe verhältnismäßig ungenau ist. Deshalb ist am Ende des Streukopfes eine Egalisierungswalze als Verteilelement angebracht, die in ihrer Höhe auf eine vorgegebene Vliesdicke einstellbar ist. Dabei werden die überschüssigen abgekämmten Fasern abgesaugt und wieder dem Faserkreislauf zugeführt. Da bei den abgesaugten beleimten Fasern durch den Zeitverlust bereits Abbindevorgänge eingetreten sind und durch den Lufttransport die Fasern abtrocknen, wirkt sich dies insbesondere bei größeren Egalisierungsmengen ungünstig auf die Plattenqualität aus.

Aus der EP 0 800 902 Al ist ein Verfahren zur kontinuierlichen Herstellung eines Vlieses für Holzwerkstoffplatten bekannt. Dabei werden aus einem über der Streustation angeordneten Dosierbunker beleimte Holzspäne ausgetragen und auf drei darunter angeordnete Vorauflösewalzen gegeben. Unter den Vorauflösewalzen ist ein Walzenstuhl mit Streuwalzen angeordnet, auf den die Späne von den Vorauflösewalzen verteilt werden. Die Streuwalzen sind im wesentlichen zylindrisch ausgebildet und liegen mit ihren glatten Oberflächen relativ dicht aneinander und besitzen vorzugsweise an ihrer Oberfläche schräggestellte Schlitze, in denen Zwischenvorräte der Späne gebildet werden. Durch diese Zwischenvorräte wird eine kontinuierliche Streuung eines Spänevlieses auf ein darunter liegendes Formband gewährleistet. Zur Anpassung des Streuverhaltens der Schlitze an das schräg ansteigende Spänevlies ist der Walzenstuhl in seiner Höhe verstellbar. Zur Windseparierung soll aber zwischen dem Spänevlies und dem Walzenstuhl ein Windkanal verbleiben. Eine derartige Streuvorrichtung zur Ausstreuung eines Spänevlieses ist grundsätzlich zur Herstellung von Faserplatten nicht geeignet, da in den speziell ausgebildeten Streuwalzen keine Zwischenvorräte aus längeren Fasermaterialien gebildet werden können.

Der Erfindung liegt deshalb die Aufgabe zugrunde, eine Streustation der eingangs genannten Art so zu verbessern, daß die Streuung so genau erfolgt, daß kein Materialrückfluß mehr notwendig ist.

Diese Aufgabe wird durch die im Patentanspruch 1 angegebene Erfindung gelöst. Weiterbildungen und vorteilhafte Ausführungsbeispiele der Erfindung sind in den Unteransprüchen angegeben.

Die Erfindung hat den Vorteil, daß durch den höhenverstellbaren Streukopf die Streuwalzen oder zumindest eine der Streuwalzen als Verteilelement arbeitet, das die Fasern im Streubereich durch Zurückkämmen egalisiert, so daß keine vorzeitigen Abbinde- oder Trocknungsvorgänge durch einen Rücktransport eintreten.

Die Erfindung hat auch den Vorteil, daß durch die Verschwenkung des Dosierbandes mit dem Streukopf auf einfache Art und Weise ein sehr großer Höhenstreubereich von ca. 6 bis 160 cm mit einer Streustation ausführbar ist.

Weiterhin hat die Erfindung den Vorteil, daß durch die gemeinsame Höhenänderung der Fördervorrichtung und der Streuvorrichtung zum Formband sich die Fallhöhe der Fasern in der Streuvorrichtung nicht verändert, so daß die Faserdichte gleich bleibt.

Eine besondere Ausbildung der Erfindung hat den Vorteil, daß durch das vorgeschaltete Dosierband sehr genau die den Streuwalzen zugeführte Fasermenge vorgegeben werden kann, so daß im Streukopf stets die erforderliche Fasermenge vorhanden ist, um eine genaue Streuung und eine geringe Egalisierung zu erreichen.

Bei einer weiteren besonderen Ausbildung der Erfindung mit Egalisierungsmitteln am Dosierband ist auf vorteilhafte Weise eine konstante Volumenmenge in den Streukopf einleitbar, wodurch eine sehr genaue gleichmäßige Streuung ermöglicht wird.

Bei einer weiteren vorteilhaften Ausbildung mittels einer Bandwaage wird eine gravimetrische Dosierung der zu streuenden Fasermenge erreicht, wodurch eine sehr homogene Streuung und gleichmäßige Eigenschaften der fertigen Platten ermöglicht werden. Durch die gleichzeitige Streuung und Egalisierung durch den schwenkbaren Streukopf wird auf vorteilhafte Weise auch gleichzeitig eine Vorverdichtung des Faservlieses erreicht, wodurch eine nachfolgende Vorverdichtung entbehrlich ist oder zumindest nur mit geringerer Verdichtungswirkung durchgeführt werden kann.

Bei einer weiteren besonderen Ausbildung mit verstellbarer Seitenbegrenzung ist vorteilhafterweise auch die Streuung unterschiedlich breiter Platten möglich, wobei die Außenkanten genau streubar sind, ohne daß eine Nachbearbeitung der Faservlieskanten erforderlich ist.

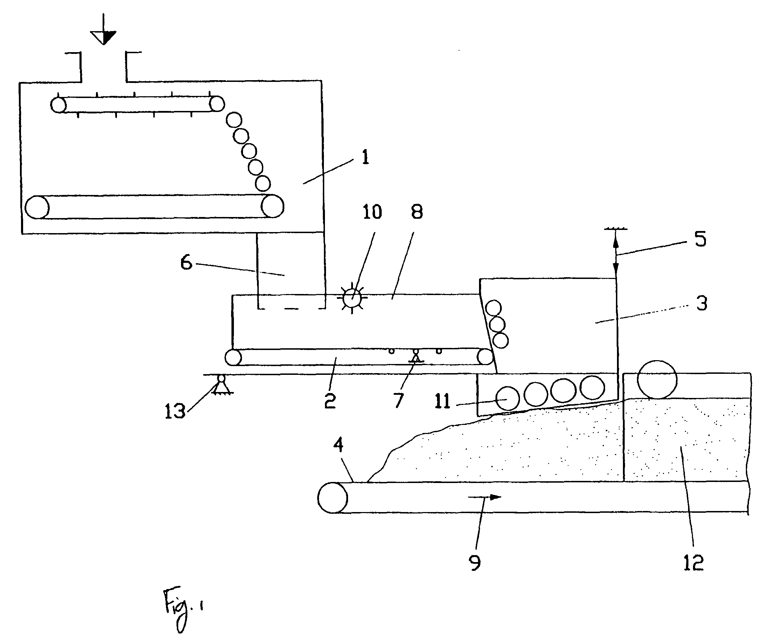

Die Erfindung wird anhand eines Ausführungsbeispiels, das in der Zeichnung dargestellt ist, näher erläutert.

In der Zeichnung ist schematisch eine Formstation mit mindestens einem Dosierbunker 1, mit mindestens einer Fördervorrichtung 2 mit daran befestigtem Streukopf 3 über einem Formband 4 dargestellt, wobei die Fördervorrichtung 2 an der dem Streukopf 3 gegenüberliegenden Seite drehbar gelagert ist und durch eine Hubvorrichtung 5 in der Höhe verstellt werden kann.

Die Formstation ist vorzugsweise zur Herstellung von MDF-Platten und HDF-Platten einsetzbar, so daß aus dem Dosierbunker 1 beleimte Holzfasern über eine vorgegebene Breite kontinuierlich ausgetragen werden. Die Holzfasern werden über eine Austragsöffnung 6 auf eine darunter angeordnete Fördervorrichtung 2 aufgegeben, die als Dosierband oder Dosierbandwaage ausgebildet sein kann. Bei einer Dosierbandwaage ist in die Fördervorrichtung 2 eine gravimetrische Wägeeinrichtung 7 integriert, mittels derer die Förderrate als Masse pro Zeit steuerbar ist. Dadurch kann einer nachfolgenden Streuvorrichtung 3 je nach gewünschter Plattendicke, -breite oder -dichte stets eine dafür ermittelbare Fasermenge zugeführt werden. Die Dosierbandwaage 2 besitzt an ihren Außenrändern Begrenzungswände 8, die der maximalen Streuhöhe entsprechen. Allerdings kann die Höhe der Begrenzungswände 8 auch höher oder niedriger gewählt werden, je nachdem, ob die Bandgeschwindigkeit höher oder niedriger als die Formbandgeschwindigkeit ist.

Die Fördervorrichtung ist als Dosierbandwaage 2 ausgebildet und fördert die beleimten Holzfasern in der gewünschten Vliesbreite zur Streuvorrichtung 3. Soweit mit der Streustation verschiedene Plattenbreiten hergestellt werden sollen, sind die Begrenzungswände 8 entsprechend breitenverstellbar ausgebildet. Oberhalb der Dosierbandwaage 2 ist in Förderrichtung 9 vor der Wägeeinrichtung 7 ein höhenverstellbares Egalisierungselement 10 in Form einer Walze, Schnecke oder vergleichbarer Egalisierungselemente vorgesehen, in der eine Höhenegalisierung über die gesamte Förderbreite vorgenommen wird.

An der der Aufgabestelle 6 gegenüberliegenden Seite der Dosierbandwaage 2 ist eine Streuvorrichtung 3 vorgesehen, die fest mit der Dosierbandwaage 2 verbunden ist. Die Streuvorrichtung 3 ist als Streukopf ausgebildet, der über verschiedene Walzenarten verfügen kann, um die Holzfasern auf ein darunter angeordnetes Formband 4 zu streuen. Die Holzfasern können aber auch durch eine an der Dosierbandwaage 2 angeordnete Verteilrechenvorrichtung oder eine Fächerschurre gestreut werden. Dabei besteht eine Fächerschurre aus mehreren parallel zur Förderrichtung 9 angeordneter Leitbleche, die den Förderstrom in mehrere parallele Teilströme aufteilen und wobei durch Verschieben oder Verschwenken der Leitbleche die Streubreite einstellbar ist.

Der dargestellte Streukopf 3 besteht aus mehreren hintereinander angeordneten Streu- oder Egalisierungswalzen 11, die quer zur Förderrichtung 9 angeordnet sind und die Materialfasern gut durchmischt und möglichst homogen in der gewünschten Höhe auf das Formband 4 aufstreuen. Da bei der Streuung von HDF- und MDF-Platten die durchmischten Fasern große Luftanteile aufweisen, muß auf das Formband 4 ein Faservlies 12 aufgestreut werden, das mindestens das 20- bis 40fache der vorgesehenen Plattendicke beträgt. Eine derart große Streuhöhe ist dadurch verringerbar, daß die Streuwalzen 11 als verstellbare Verteilelemente so am oder im Faservlies 12 angeordnet sind, daß sie die Fasern nach unten zum Formband drücken und bereits dadurch eine Verdichtungswirkung erzielt wird.

Um aber auf einfache Weise in einer Streustation Platten von 1,6 bis 40 mm Dicke mit Streuhöhen von 6 bis 160 cm streuen zu können, ist die Dosierbandwaage 2 einseitig drehbar gelagert und mittels einer Hubvorrichtung 5 um diesen Drehpunkt verschwenkbar. Dazu wird die Dosierbandwaage 2 im Bereich der Faseraufgabe 6 durch ein Drehlager 13 gegenüber einem ortsfesten Teil drehbar gelagert. Das Lagerelement 13 kann auch weiter zur Förderrichtung 9 vorgesehen werden, wodurch aber nicht mehr mit vergleichsweise geringen Verschwenkwinkeln die vorgesehenen Streuhöhen-Unterschiede von 6 bis 160 cm einstellbar sind.

An der dem Drehlager 13 in Förderrichtung 9 gegenüberliegenden Seite ist eine Hubvorrichtung 5 vorgesehen, die an der Streuvorrichtung 3 einerseits und an einem ortsfesten Teil andererseits befestigt ist. Durch diese Hubvorrichtung 5 ist der Streukopf 3 auf einfache Weise über einen großen Bereich in der Höhe verstellbar, ohne daß dadurch zusätzlich die Fördervorrichtung 2 in der Höhe angepaßt werden müßte. Der Streukopf 3 kann auch gelenkig an der Fördervorrichtung 2 befestigt sein, so daß der Winkel des Streukopfes 3 zum Formband 4 während des Hubvorgangs so steuerbar ist, daß er unverändert bleibt. Die Hubvorrichtung 5 kann auch an der Fördervorrichtung 2 oder sonst näher zum Drehpunkt 13 angeordnet werden, soweit dies die konstruktiven Voraussetzungen zulassen.

Bei einer weiteren Ausführungsform kann die Höhe zum Formband 4 auch durch eine weitere Hubvorrichtung horizontal und parallel zum Formband 4 verstellt werden. Dann kann eine Hubvorrichtung an der Fördervorrichtung 2 und die andere Hubvorrichtung an der Streuvorrichtung 3 angreifen und beide Vorrichtungen synchron in der Höhe verstellen. Dadurch wird auch die Fallhöhe in der Streuvorrichtung nicht verändert.

## Patentansprüche

1. Streustation für Faserplatten, die mindestens einen Dosierbunker (1) und mindestens eine Streuvorrichtung (3) enthält, durch die die beleimten Fasern auf ein Formband (4) aufstreubar sind, wobei die Höhe des gestreuten Faservlieses (12) durch mindestens ein in der Höhe verstellbares Verteilelement (11) egalisiert wird, **dadurch gekennzeichnet, daß** nach dem Dosierbunker (1) eine Fördervorrichtung (2) mit daran befestigter Streuvorrichtung (3) vorgesehen ist, die gemeinsam in der Höhe zum Formband (4) verstellbar sind.

2. Streustation nach Anspruch 1, **dadurch gekennzeichnet, daß** die Fördervorrichtung (2) mit daran befestigter Streuvorrichtung (3) mittels eines Drehlagers (13) gegenüber der Horizontalen schwenkbar gelagert sind, wobei die Streuvorrichtung (3) mit den darin angeordneten Verteilelementen (11) durch das Verschwenken gemeinsam in der Höhe zum Formband (4) verstellbar ist.

3. Streustation nach Anspruch 1 oder 2, **dadurch gekennzeichnet, daß** das Drehlager (13) zwischen der Fördervorrichtung (2) und einem ortsfesten Teil im Bereich der Materialaufgabe (6) aus dem Dosierbunker (1) angeordnet ist.

4. Streustation nach einem der vorhergehenden Ansprüche, **dadurch gekennzeichnet, daß** zum Verschwenken eine Hubvorrichtung (5) vorgesehen ist, durch die die Fördervorrichtung (2) und die Streuvorrichtung (3) vertikal verstellbar sind.

5. Streustation nach einem der vorhergehenden Ansprüche, **dadurch gekennzeichnet, daß** die Hubvorrichtung (5) an der Förder- (2) und/oder Streuvorrichtung (3) so angeordnet ist, daß die Höhe der Streuvorrichtung (3) zum Formband (4) in einem Bereich von ca. 6 bis 200 cm verstellbar ist.

6. Streustation nach einem der vorhergehenden Ansprüche, **dadurch gekennzeichnet, daß** die Fördervorrichtung (2) als Dosierband oder Dosierbandwaage ausgebildet ist.

7. Streustation nach einem der vorhergehenden Ansprüche, **dadurch gekennzeichnet, daß** an der Fördervorrichtung (2) Begrenzungswände (8) vorgesehen sind, durch die die Breite der geförderten Fasern einstellbar ist.

8. Streustation nach einem der vorhergehenden Ansprüche, **dadurch gekennzeichnet, daß** oberhalb der Fördervorrichtung (2) eine vertikal verstellbare Egalisierungswalze (10), -schnecke oder vergleichbare Egalisierungselemente angeordnet sind, durch die die geförderten Fasern vergleichmäßigt werden.

9. Streustation nach einem der vorhergehenden Ansprüche, **dadurch gekennzeichnet, daß** die Streuvorrichtung (3) als Walzen-, Rollen-, Schnecken- oder Rechenstreukopf oder als Fächerschurre ausgebildet ist.

## Claims

1. Scattering station for fibre boards, which comprises at least one proportioning hopper (1) and at least one scattering device (3), by means of which the sized fibres can be scattered onto a moulding band (4), wherein the height of the scattered fibrous web (12) is levelled by at least one distributing element (11) which is adjustable in height, **characterised in that** a conveyor device (2) with scattering device (3) fastened thereto is provided after the proportioning hopper (1), which devices can be jointly adjusted in height in relation to the moulding band (4).

2. Scattering station according to Claim 1, **characterised in that** the conveyor device (2) with scattering device (3) fastened thereto is mounted by means of a pivot bearing (13) so as to be pivotable with respect to the horizontal, wherein the scattering device (3) with the distributing elements (11) disposed therein can be jointly adjusted in height in relation to the moulding band (4) by the pivoting action.

3. Scattering station according to Claim 1 or 2, **characterised in that** the pivot bearing (13) is disposed between the conveyor device (2) and a stationary part in the region of the material feed (6) from the proportioning hopper (1).

4. Scattering station according to any one of the preceding Claims, **characterised in that** a lifting device (5) is provided for pivoting, by means of which device the conveyor device (2) and the scattering device (3) can be vertically adjusted.

5. Scattering station according to any one of the preceding Claims, **characterised in that** the lifting device (5) is disposed at the conveyor (2) and/or scattering device (3) such that the height of the scattering device (3) in relation to the moulding band (4) can be adjusted in a range of approximately 6 to 200 cm.

6. Scattering station according to any one of the preceding Claims, **characterised in that** the conveyor device (2) is formed as a proportioning belt or proportioning belt weigher.

7. Scattering station according to any one of the preceding Claims, **characterised in that** boundary walls (8) are provided at the conveyor device (2), by means of which walls the width of the conveyed fibres can be set.

8. Scattering station according to any one of the preceding Claims, **characterised in that** a vertically adjustable levelling roller (10), screw or comparable levelling elements are disposed above the conveyor device (2), by means of which elements the conveyed fibres can be equalised.

9. Scattering station according to any one of the preceding Claims, **characterised in that** the scattering device (3) is formed as a roller, roll, screw or rake-type scattering head or as a fan-type chute.

## Revendications

1. Poste d'épandage pour panneaux de fibres, qui contient au moins une trémie de dosage (1) et au moins un dispositif d'épandage (3) par lequel les fibres encollées peuvent être répandues sur une bande de formage (4), la hauteur de la nappe de fibres (12) épandue étant égalisée par au moins un élément répartiteur (11) réglable en hauteur, **caractérisé en ce qu'**il est prévu, après la trémie de dosage (1), un dispositif de transport (2) avec dispositif d'épandage (3) fixé à celui-i, qui sont réglables ensemble en hauteur par rapport à la bande de formage (4).

2. Poste d'épandage selon la revendication 1, **caractérisé en ce que** le dispositif de transport (2) avec dispositif d'épandage (3) fixé à celui-ci sont montés pivotants par rapport à l'horizontale au moyen d'un palier tournant (13), le dispositif d'épandage (3) avec les éléments répartiteur (11) disposés à l'intérieur, étant réglables ensemble en hauteur par rapport à la bande de formage (4), par le pivotement.

3. Poste d'épandage selon la revendication 1 ou 2, **caractérisé en ce que** le palier tournant (13) est disposé entre le dispositif de transport (2) et une partie fixe dans la zone de la distribution du matériau (6) par la trémie de dosage (1).

4. Poste d'épandage selon l'une des revendications précédentes, **caractérisé en ce que** pour le pivotement, il est prévu un dispositif de levage (5) au moyen duquel le dispositif de transport (2) et le dispositif d'épandage (3) sont réglables verticalement.

5. Poste d'épandage selon l'une des revendications précédentes, **caractérisé en ce que** le dispositif de levage (5) est disposé sur le dispositif de transport (2) et/ou le dispositif d'épandage (3) de manière que la hauteur du dispositif d'épandage (3) par rapport à la bande de formage (4) soit réglable entre environ 6 et 200 cm.

6. Poste d'épandage selon l'une des revendications précédentes, **caractérisé en ce que** le dispositif de transport (2) est réalisé comme courroie de dosage ou bascule courroie de dosage.

7. Poste d'épandage selon l'une des revendications précédentes, **caractérisé en ce que** sur le dispositif de transport (2) sont prévues des parois de délimitation (8) par lesquelles la largeur des fibres transportées est réglable.

8. Poste d'épandage selon l'une des revendications précédentes, **caractérisé en ce qu'**au-dessus du dispositif de transport (2) sont disposés un cylindre d'égalisation (10) réglable verticalement, une vis sans fin d'égalisation ou des éléments d'égalisation comparables, par lesquels les fibres transportées sont égalisées.

9. Poste d'épandage selon l'une des revendications précédentes, **caractérisé en ce que** le dispositif d'épandage (3) est réalisé comme tête d'épandage à cylindre, à rouleau, à vis sans fin ou à râteau ou comme goulotte à écailles.
